# EUROPÄISCHE PATENTSCHRIFT

(11) **EP 2 715 335 B1**
(45) Veröffentlichungstag und Bekanntmachung des Hinweises auf die Patenterteilung: **16.10.2019**
(21) Anmeldenummer: 12726767.2
(22) Anmeldetag: 24.05.2012
(51) Int. Cl.: G01N 27/90, G01B 7/06

(54) **MESSSONDE ZUR MESSUNG DER DICKE DÜNNER SCHICHTEN SOWIE VERFAHREN ZUR HERSTELLUNG EINES SENSORELEMENTES FÜR DIE MESSSONDE**
MEASURING PROBE FOR MEASURING THE THICKNESS OF THIN LAYERS, AND METHOD FOR THE PRODUCTION OF A SENSOR ELEMENT FOR THE MEASURING PROBE
SONDE DE MESURE PERMETTANT DE MESURER L'ÉPAISSEUR DE COUCHES MINCES ET PROCÉDÉ DE FABRICATION D'UN ÉLÉMENT SENSIBLE POUR LA SONDE DE MESURE

(30) Priorität: 25.05.2011 DE 102011103122; 25.05.2011 DE 102011103123
(43) Veröffentlichungstag der Anmeldung: 09.04.2014
(73) Patentinhaber: Helmut Fischer GmbH Institut für Elektronik und Messtechnik., 71069 Sindelfingen (DE)
(72) Erfinder: FISCHER, Helmut, CH-6315 Oberägeri (CH)
(74) Vertreter: Mammel und Maser
(86) Internationale Anmeldenummer: PCT/EP2012/059691
(87) Internationale Veröffentlichungsnummer: WO 2012/160132

(56) Entgegenhaltungen:
- WO-A2-2010/044670
- US-A- 3 855 561
- US-A- 4 829 251

## Beschreibung

Die Erfindung betrifft eine Messsonde zur Messung der Dicke dünner Schichten sowie ein Verfahren zur Herstellung eines Sensorelementes für die Messsonde gemäß dem jeweiligen Oberbegriff der unabhängigen Ansprüche.

Aus der DE 10 2005 054 593 A1 ist eine Messsonde für die Messung der Dicke dünner Schichten bekannt. Diese Messsonde umfasst ein Gehäuse, in dem zumindest ein Sensorelement vorgesehen ist, welches entlang einer Längsachse des Gehäuses zumindest geringfügig bewegbar im Gehäuse aufgenommen ist. Das Sensorelement umfasst zumindest eine erste und eine zweite Spulenvorrichtung, die von einem Topfkern aufgenommen sind. Der Topfkern umfasst einen Mittelzapfen, an dessen stirnseitig zum Gehäuse weisenden Ende eine Aufsetzkalotte vorgesehen ist. Der Topfkern mit dem daran angeordneten Sensorelement und der Aufsetzkalotte wird von einem federnd nachgiebigen Halteelement aufgenommen, welches an einem stirnseitigen Ende des Gehäuses befestigt ist.

Solche Messsonden eignen sich zur Schichtdickenmessung nach dem magnetinduktiven Verfahren, bei der die Dicke von Nicht-Eisenmetall-Schichten auf magnetisierbaren Grundwerkstoffen zerstörungsfrei ermittelt werden können. Alternativ kann zur Messung von Schichtdicken das Sensorelement einen Hallsensor aufweisen, so dass die Schichtdickenmessung nach dem Wirbelstromverfahren möglich ist, um die Dicke von nicht elektrisch leitenden Schichten auf Nicht-Eisenmetall zerstörungsfrei zu erfassen.

Des Weiteren ist aus der DE 699 35 610 C2 bekannt, ein elektrisches Messelement zur Messung der Dicke von Schichten mittels eines induktiven Wirbelstromverfahrens einzusetzen, bei welchem eine Spule aus einem elektrisch leitenden Material so geformt ist, dass sie wenigstens einen spiralförmigen Teil umfasst. Dabei kann beidseitig zu einem sich von einem Zentrum aus radial nach außen spiralförmig erstreckt. Zur Durchführung des Messverfahrens ist erforderlich, dass dieses elektrische Messelement nahe - jedoch mit Abstand - an dem Messobjekt positioniert wird. Dies erfordert zusätzliche Hilfsmittel, um das Messelement nahe dem Messobjekt zu positionieren. Durch die Positionierung des Messelementes mit Abstand zum Messobjekt weist dieses einen zu großen Abstand auf, wodurch die Messempfindlichkeit sinkt und somit die Messgenauigkeit abnimmt.

Aus der US 3,855,561 ist eine Filterspule mit einem abgleichbaren Ferritschalenkern bekannt. Auf einer Kernschale mit einem feststehenden Butzen ist eine archimedische Spule fest angeordnet. Diesem feststehenden Butzen gegenüberliegend ist ein bewegbarer zylindrischer Butzen vorgesehen, um ein Luftspalt zwischen den zwei Butzen einzustellen, um einen Abfall einer Spulengüte zu vermeiden. Diese archimedische Spule wird durch ein Ätzverfahren hergestellt.

Aus der WO2010/044670 A2 ist eine auf eine Leiterplatte gedruckte archimedische Spule bekannt.

Die US 4,829,251 betrifft eine Messsonde zur Messung der Dicke dünner Schichten, bei welchen auf einem in dem Gehäuse feststehenden Kern mit einem gesinterten Hartmetallstift zwei Spulen vorgesehen sind, durch welche eine Schichtdickenmessung nach dem magnetinduktiven Verfahren durchführbar ist.

Der Erfindung liegt die Aufgabe zugrunde, eine Messsonde weiterzuentwickeln, so dass die erhöhten Anforderungen an die Messgenauigkeit erfüllt werden. Des Weiteren liegt der Erfindung die Aufgabe zugrunde, ein Verfahren zur Herstellung einer Spulenvorrichtung für eine solche Messsonde vorzuschlagen.

Die Aufgabe wird erfindungsgemäß durch die Merkmale der Messsonde gemäß dem Anspruch 1 gelöst. Weitere vorteilhafte Ausgestaltungen und Weiterbildungen sind in den weiteren Ansprüchen angegeben.

Die erfindungsgemäße Ausgestaltung der Messsonde zur taktilen Messung der Dicke dünner Schichten mit zumindest einer ersten Spulenvorrichtung, welche aus einem scheiben- oder ringförmigen Träger und zumindest einer darauf angeordneten archimedischen Spule besteht, weist den Vorteil auf, dass eine sehr klein bauende, insbesondere flach bauende, Messsonde geschaffen werden kann. Durch die Ausgestaltung von zumindest einer archimedischen Spule kann des Weiteren erzielt werden, dass die Kraftlinien des Magnetfeldes durch die archimedische Spule entlang der Stirnseite des Gehäuses der Messsonde geführt und somit näher an die Oberfläche der zu messenden Schicht herangeführt werden können, wodurch eine höhere Auflösung bei der Auswertung der Messergebnisse erzielbar ist. Insbesondere kann durch eine solche erfindungsgemäße Ausgestaltung der Messsonde eine klein bauende taktile Messsonde geschaffen werden, welche Schichtdicken auf Nicht-Eisenmetallen oder Nichteisensubstraten nach dem Wirbelstromverfahren erfasst. Durch diese Ausgestaltung kann das Hochfrequenzfeld quasi direkt an die Messoberfläche herangeführt werden, wodurch eine sehr hohe Empfindlichkeit der Messsonde und somit eine hohe Auflösung erzielt werden kann, wodurch auch dünnere Schichtdicken taktil erfasst werden können. Gleichzeitig wird aufgrund der Verwendung von ferritischem Material für den Grundkörper der Aufsetzkalotte eine verbesserte Messempfindlichkeit bei der Schichtdickenmessung nach dem Wirbelstromverfahren ermöglicht. Die aus Hartmetall bestehende Polkappe erhöht die Verschleißfestigkeit für die Messsonde bei der taktilen Messung. Trotz der zentrischen Anordnung der Aufsetzkalotte und der sich daran anschließenden archimedischen Spule, deren erste Windung mit Abstand zur Längsmittelachse liegt, ist die Messempfindlichkeit aufgrund des Grundkörpers aus einem ferritischen Material verbessert. Dies beruht darauf, dass bei einem hochfrequenten magnetischen Wechselfeld zur Durchführung des Wirbelstromverfahrens durch den ferritischen Grundkörper eine unmittelbare Heranführung des Magnetfeldes an die Messoberfläche verbessert wird. Darüber hinaus geht bei der erfindungsgemäßen Ausgestaltung der Messsonde des Weiteren einher, dass für die aus einem Hartmetall ausgebildete Polkappe der Aufsetzkalotte in diesem Bereich ein Abhebeeffekt der Aufsetzkalotte zur Messoberfläche eintreten kann.

Bevorzugt ist an dem Kernabschnitt der Aufsetzkalotte eine verrundete Auflagefläche vorgesehen, in deren Längsachse die Polkappe angeordnet ist. Dadurch wird die Aufsetzfläche des Grundkörpers durch die aus Hartmetall bestehende Polkappe ausgebildet und somit eine erhöhte Verschleißfestigkeit erreicht. Weiterhin wird ermöglicht, dass sowohl beim Aufsetzen auf den Messgegenstand eine hohe mechanische Widerstandsfähigkeit gegeben ist als auch das Hochfrequenzfeld bei der Widerstromverfahren sehr nahe an den Messgegenstand herangeführt werden kann, so dass wiederum eine erhöhte Messempfindlichkeit erzielt wird.

Nach einer weiteren bevorzugten Ausgestaltung der Aufsetzkalotte ist vorgesehen, dass die Polkappe sich über die gesamte verrundete Auflagefläche erstreckt oder kleiner ausgebildet ist. In Abhängigkeit des Durchmessers der Aufsetzkalotte kann sowohl die eine als auch die andere Ausführungsform gewählt werden. Bevorzugt wird jedoch eine gegenüber der verrundeten Aufsetzfläche kleinere Polkappe ausgewählt, deren Mittelpunkt in der Längsachse des Grundkörpers liegt, so dass ein kleiner Aufsetzpunkt beziehungsweise eine Aufsetzfläche mit einer hartmetallischen Polkappe erzielt wird.

Eine erste Ausführungsform der Aufsetzkalotte sieht vor, dass die Polkappe durch eine Hartmetallbeschichtung hergestellt ist. Bei einer solchen Ausführungsform kann beispielsweise eine auf einer Stirnseite des Grundkörpers oder auf die verrundete Auflagefläche aufgebrachte Beschichtung vorgesehen sein, die durch Polieren endbearbeitet wird. Eine solche Beschichtung kann beispielsweise eine TiC-Beschichtung oder dergleichen sein, die beispielsweise eine Schichtdicke von 1 µm bis 10 µm, insbesondere 2 µm, umfasst. Ebenso kann die Beschichtung auch auf einen geringfügig vertieften Bereich um die Längsachse der Stirnseite des Grundkörpers oder der verrundeten Auflagefläche aufgebracht und anschließend gemeinsam poliert werden.

Eine alternative Ausführungsform der Aufsetzkalotte sieht vor, dass die Polkappe durch einen Hartmetallkern ausgebildet ist, der sich vorzugsweise vollständig durch den Grundkörper hindurch erstreckt. Ein solcher Hartmetallkern kann als Hartmetallstift ausgebildet sein, der sich entlang der Längsachse erstreckt.

Alternativ kann die verrundete Aufsetzfläche oder eine Stirnseite des Grundkörpers im Durchmesser kleiner als der Kernabschnitt des Grundkörpers ausgebildet und die Polkappe an dem verjüngten Halteabschnitt vorgesehen sein, der einen gerundeten oder gestuften Übergang zum Kernabschnitt aufweist. Durch diese Anordnung können die Kraftlinien innerhalb der Aufsetzkalotte zum Aufsetzpunkt konzentriert werden. Darüber hinaus ist durch den im Durchmesser gegenüber dem Kernabschnitt verringerten Halteabschnitt eine Spulenvorrichtung mit einem verringerten Durchmesser um den Halteabschnitt herum positionierbar. Dadurch wird wiederum eine höhere Messempfindlichkeit, insbesondere bei sehr dünnen Schichten, ermöglicht.

Eine alternative Ausführungsform der Erfindung sieht an dem verjüngten Halteabschnitt des Grundkörpers der Aufsetzkalotte den Träger der Spulenvorrichtung vor. Somit ist eine Verringerung des Spulendurchmessers gegeben, wodurch wiederum eine verbesserte Messung von dünnen Schichten, also Schichten im Bereich von weniger als 100 µm, insbesondere weniger als 10 µm, taktil ermöglicht wird.

Eine weitere bevorzugte Ausgestaltung der Aufsetzkalotte sieht vor, dass die Höhe des Halteabschnitts am Grundkörper der Aufsetzkalotte im Wesentlichen der Dicke des Trägers der Spulenvorrichtung entspricht. Dadurch kann gleichzeitig eine lagerichtige Positionierung des Trägers zur Aufsetzkalotte beziehungsweise umgekehrt durch diese Ausgestaltung ermöglicht werden. Der Träger der Spulenvorrichtung ist bevorzugt aus einem Halbleitermaterial, insbesondere Silicium oder Germanium, ausgebildet.

Eine weitere bevorzugte Ausgestaltung der Aufsetzkalotte sieht an dem Grundkörper der Polkappe gegenüber liegend eine plane Anlagefläche vor. Dadurch kann die Aufsetzkalotte mit einer einfachen Geometrie hergestellt werden.

Bevorzugt wird als ferritisches Material für die Aufsetzkalotte ein Eisenoxid oder ein Eisenoxid ähnliches Material eingesetzt. Dieses Material kann zur Herstellung einer verrundeten Polkappe für eine erhöhte Feldkonzentration präzise rundgeschliffen werden. Alternativ kann als ferritisches Material ein Kunststoffmaterial mit darin eingebrachten Eisenpartikeln eingesetzt werden.

Nach einer bevorzugten Ausgestaltung der Erfindung umfasst die erste Spulenvorrichtung eine einlagige archimedische Spule auf dem Träger. Diese bevorzugte Ausgestaltung ist in der Herstellung einfach und besonders flachbauend, insbesondere bei einem flach ausgebildeten Träger, wodurch ein kleiner Bauraum für die Spulenvorrichtung genügt.

Nach einer weiteren bevorzugten Ausgestaltung der Erfindung ist die zumindest eine, vorzugsweise einlagige, archimedische Spule der ersten Spulenvorrichtung zur Stirnseite des Gehäuses weisend angeordnet, welche bei der Messung der Schichtdicke der Messoberfläche unmittelbar gegenüberliegt. Somit wird eine besonders nahe Anordnung der Spulenvorrichtung an die Messoberfläche ermöglicht, wobei sich der Abstand von der zweiten Spulenvorrichtung zur Messoberfläche durch die Beabstandung eines Aufsetzpunktes beziehungsweise einer verrundeten Polkappe einer Aufsetzkalotte zur Spule der zweiten Spulenvorrichtung bestimmt.

Nach einer bevorzugten Ausgestaltung der Erfindung ist auf dem Träger zumindest eine zweite Spulenvorrichtung vorgesehen, welche als zumindest eine weitere archimedische Spule ausgebildet ist. Dadurch kann eine erste innere Spule und diese umgebend eine zweite äußere Spule auf derselben Seite des ring- oder scheibenförmigen Träger aufgebracht werden, so dass diese Spulen vorzugsweise in einer gemeinsamen Ebene liegen. Dadurch werden die jeweiligen Spulen unmittelbar der Messoberfläche des Messgegenstandes zugeordnet, wodurch eine verbesserte Messgenauigkeit erzielt wird. Alternativ kann die erste innere Spule zur Messoberfläche weisend an dem Träger vorgesehen und die zweite äußere Spule auf der gegenüberliegenden Seite des Trägers angeordnet sein.

Bei dieser alternativen Ausgestaltung nimmt der Träger die zumindest eine erste und zumindest eine zweite Spule bevorzugt als jeweilige archimedische Spule auf, und der Träger ist vorzugsweise an einem stirnseitigen Ende eines Gehäuses des Sensorelementes angeordnet. Dadurch kann eine sehr klein bauende und empfindliche Messsonde geschaffen werden, welche insbesondere bei einer Schichtdickenmessung im Bereich der Mikromechanik oder Mikroelektronik eingesetzt werden kann.

Des Weiteren ist bevorzugt vorgesehen, dass die erste und zweite Spule einander gegenüberliegend auf dem Träger angeordnet sind und diejenige Spule, welche mehr Windungen als die andere Spule umfasst, diese zumindest teilweise überdeckt. Dabei ist bevorzugt vorgesehen, dass die Spule mit weniger Windungen zur Schichtdickenmessung vorgesehen ist und die Spule mit dieser gegenüber mehr Windungen zur Krümmungskompensation einer Messoberfläche eingesetzt wird beziehungsweise zur Ermittlung, ob die zu messende Schicht in einer Ebene oder außerhalb einer Ebene liegt.

Eine weitere Ausführungsform der Spulenvorrichtung sieht vor, dass die erste Spule mit weniger Windungen zur Messung der Schichtdicke und die zweite Spule mit dieser gegenüber mehreren Windungen zur Ermittlung der Messoberfläche gegenüber einer Abweichung von einer Ebene mit einer Frequenz von mehr als 1 MHz beaufschlagbar ist.

Eine weitere bevorzugte Ausgestaltung der Erfindung sieht auf der ersten Spulenvorrichtung mit der zumindest einen archimedischen Spule eine Isolierschicht vor. Diese Isolierschicht dient als Schutzschicht vor Beschädigungen oder Korrosion.

Bei einer weiteren Ausführungsform wird die Spulenvorrichtung einer Aufsetzkalotte beziehungsweise unmittelbar benachbart an eine Polkappe oder an diese angrenzend zugeordnet, so dass die Aufsetzkalotte in einem Sensorgehäuse beziehungsweise der Träger in einem Sensorgehäuse des Sensorelementes durch eine Klebe-, Rast- oder Steckverbindung befestigbar ist.

Zur Herstellung der zumindest einen ersten Spulenvorrichtung besteht der Träger bevorzugt aus einem elektrisch nicht leitenden und nicht magnetisierbaren Material. Insbesondere ist der Träger aus einem Halbleitermaterial, wie beispielsweise Germanium oder Silicium, insbesondere Germanium- oder Siliciumscheiben, hergestellt, welche vorzugsweise eine Dicke von weniger als 300 µm oder weniger als 150 µm aufweisen. Bevorzugt wird beispielsweise eine Schichtdicke von 100 µm für eine Siliciumscheibe ausgewählt. Solche Materialien sind in der Herstellung kostengünstig und weisen neutrale Eigenschaften im Hinblick auf die hoch- und niederfrequente Messung einer solchen dualen Messsonde mit einer ersten und zweiten Spulenvorrichtung auf.

Eine weitere bevorzugte Ausgestaltung einer Messsonde sieht an einem scheibenförmigen Träger aus einem Haltleitermaterial, insbesondere aus Silicium oder Germanium, eine Schaltung für die Spulenvorrichtung vor, die implementiert oder aufgedruckt ist. Diese Anordnung ermöglicht wiederum eine bevorzugt kompakte und klein auszubildende Messsonde. Darüber hinaus weist diese Integration der Schaltung in den Träger den Vorteil auf, dass eine einfache schaltungstechnische Anordnung und Leitungsverbindung zu der Spulenvorrichtung gegeben ist sowie unbewegte Teile vorliegen.

Nach einer bevorzugten Ausführungsform zur Einbindung der Schaltung in die Messsonde ist der Träger an einer zum Gehäuseinneren der Messsonde weisenden Außenseite des Sensorgehäuses oder an einer Innenseite des Sensorgehäuses angeordnet. Alternativ kann der Träger auch an einer zur Außenseite des Gehäuses der Messsonde weisenden Stirnseite am Sensorgehäuse angeordnet sein. Dadurch kann die Kompaktheit einer solchen Messsonde weiter gesteigert werden.

Die der Erfindung zugrunde liegende Aufgabe wird des Weiteren durch ein Verfahren zur Herstellung von zumindest einem Sensorelement für eine Messsonde mit zumindest einer ersten Spulenvorrichtung für eine Messsonde gelöst, bei dem auf einen ring- oder scheibenförmigen Träger mit einer zentralen Öffnung zumindest eine archimedische Spule aufgebracht ist, die vorzugsweise mit jeweils einer Anschlussstelle am Träger kontaktiert wird. Dadurch kann eine einfach in ein Sensorelement einzubauende Spulenvorrichtung geschaffen werden.

Eine Ausgestaltung des Verfahrens sieht vor, dass über einen Wickelprozess mit einem Wickeldraht zumindest eine archimedische Spule auf den Träger aufgebracht wird. Dabei wird während des Wickelprozesses ein Abstand der benachbarten Windungen eingestellt.

Bei dem Wickelprozess wird der Wickeldraht bevorzugt auf den Träger aufgeklebt und insbesondere mit einer Andruckfolie daran befestigt. Dabei können selbst sehr feine Strukturen mechanisch sicher hergestellt werden.

Die Erfindung sowie weitere vorteilhafte Ausführungsformen und Weiterbildungen derselben werden im Folgenden anhand der in den Zeichnungen dargestellten Beispiele näher beschrieben und erläutert. Es zeigen:
Figur 1 eine schematische Schnittdarstellung einer ersten Ausführungsform der erfindungsgemäßen Messsonde,
Figur 2 eine schematisch vergrößerte Schnittansicht einer ersten Ausführungsform des Sensorelementes der Messsonde gemäß Figur 1,
Figur 3 eine schematische Ansicht von unten auf das Sensorelement gemäß Figur 2,
Figur 4 eine schematisch vergrößerte Schnittansicht einer Spulenvorrichtung,
Figuren 5 und 6 schematische Seitenansichten für einen Wickelprozess zur Herstellung der zweiten Spulenvorrichtung,
Figur 7 eine schematische Schnittdarstellung einer alternativen Ausführungsform des Sensorelements der Messsonde gemäß Figur 1,
Figur 8 eine schematische Schnittdarstellung einer weiteren alternativen Ausführungsform des Sensorelementes der Messsonde gemäß Figur 1, und
Figur 9 eine schematische Schnittdarstellung einer weiteren alternativen Ausführungsform des Sensorelementes der Messsonde gemäß Figur 1.

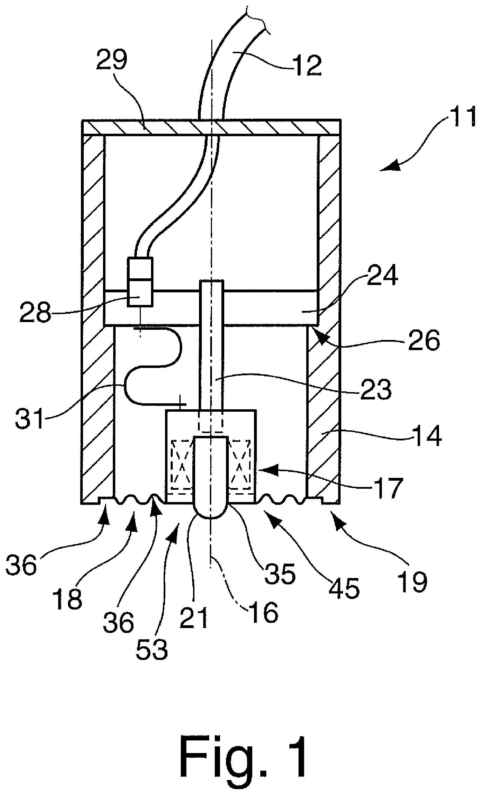

In Figur 1 ist schematisch eine Schnittansicht einer Messsonde 11 für eine nicht näher gezeigte Vorrichtung zur Messung der Dicke dünner Schichten dargestellt. Diese Messsonde 11 wird zur zerstörungsfreien Schichtdickenmessung eingesetzt. Diese Messsonde 11 kann gemäß dem Ausführungsbeispiel getrennt zur Datenverarbeitungseinrichtung der Vorrichtung zur Messung der Dicke dünner Schichten vorgesehen sein und die erfassten Messwerte über eine Verbindungsleitung 12 oder drahtlos übermitteln. Alternativ kann diese Messsonde 11 Teil der Vorrichtung zur Messung der Dicke dünner Schichten in Form eines stationären Gerätes oder eines Handgerätes sein.

Die Messsonde 11 weist ein Gehäuse 14 auf, welches insbesondere zylindrisch ausgebildet ist. In einer Längsachse 16 des Gehäuses 14 ist bevorzugt zumindest ein Sensorelement 17 angeordnet. Dieses Sensorelement 17 wird von einem Halteelement 18 getragen, welches an einem Endabschnitt 19 des Gehäuses 14 aufgenommen ist. An dem zumindest einen Sensorelement 17 ist in der Längsachse 16 des Gehäuses 14 eine Aufsetzkalotte 21 vorgesehen, welche beim Aufsetzen der Messsonde 11 auf einer Messoberfläche eines nicht näher dargestellten Messgegen-standes positionierbar ist, um eine Schichtdicke auf einem Grund- oder Trägermaterial zu ermitteln.

Das zumindest eine Sensorelement 17 ist zur Durchführung einer Messung nach dem Wirbelstromverfahren ausgebildet, das heißt, dass die Messung der Dicke von elektrisch nicht leitenden Schichten auf Nicht-Eisenmetallen, zum Beispiel von Farben, Lacken, Kunststoffen auf Aluminium, Kupfer, Messing, Edelstahl oder anderen anodisierten Schichten, auf Aluminium in einem hochfrequenten Wechselfeld ermöglicht ist. Somit handelt es sich bei einer solchen Messsonde 11 um eine duale Messsonde.

Das zumindest eine Sensorelement 17 weist beispielsweise ein koaxial zur Längsachse 16 angeordnetes Führungselement 23 auf, welches in einem gehäusefesten Lager 24 verschiebbar aufgenommen ist. Dadurch wird die Präzision für eine verkippungsfreie Aufsetzbewegung der Messsonde 11 auf der Messoberfläche des Messgegenstandes erhöht. Das Lager 24 kann als Luftlager oder reibungsarmes Gleitlager ausgebildet sein. Dieses gehäusefeste Lager 24 ist bevorzugt auf einer Schulter 26 des Gehäuses 14 angeordnet, wodurch wiederum eine einfache und schnelle Positionierung des Lagers 24 in radialer und axialer Richtung ermöglicht ist. Das Lager 24 umfasst des Weiteren einen Anschluss 28, der zum Anschluss der Verbindungsleitung 12 vorgesehen ist. In Abhängigkeit des Einsatzzweckes kann das Gehäuse 14 entsprechend komplettiert werden. Zur Ausgestaltung einer eigenständigen Sonde gemäß dem Ausführungsbeispiel wird das Gehäuse 14 beispielsweise nach dem Anschließen der Verbindungsleitung 12 mit einem Deckel 29 oder Verschluss geschlossen, so dass eine handgeführte Messsonde über eine Verbindungsleitung 12 mit einem stationären Gerät verbunden ist. Beim Einsetzen in eine Handmesssonde oder in ein stationäres Gerät kann der Deckel 29 entfallen.

Zwischen dem Sensorelement 17 und beispielsweise dem Anschluss 28 am Lager 24 ist eine flexible Leitung 31 mit mehreren Einzeldrähten oder ein flexibles Leitungsband vorgesehen, welches einer Biegebeanspruchung standhält. Eine solche Biegebeanspruchung wird durch die Hubbewegung des zumindest einen Sensorelementes 17 während dem Aufsetzen der Sonde auf der Oberfläche eines Messgegenstandes bewirkt. Dabei taucht das Sensorelement 17 zumindest geringfügig in das Gehäuse 14 ein.

Das scheibenförmig ausgebildete Halteelement 18 ist bevorzugt an einer gehäuseendseitigen Vertiefung 33 am Endabschnitt 19 des Gehäuses 14 befestigt. Dadurch wird wiederum in einfacher Weise eine radiale und axiale Ausrichtung sichergestellt. In einer ersten Ausführungsform ist das Halteelement 18 mediendicht in der Vertiefung 33 befestigt. Gleichzeitig ist die Aufsetzkalotte 21 und/oder das Sensorelement 17 mit seinem Gehäuse mediendicht in einer Bohrung 35 des Halteelementes 18 vorgesehen. Somit ist das Gehäuse 14 nach außen hermetisch dicht abgeschlossen, so dass eine Beeinträchtigung der Aufsetzbewegung und somit des Eintauchens des zumindest einen Sensorelementes 17 in das Gehäuse 14 durch Verschmutzungen nicht gegeben ist.

Die Anordnung und Lagerung des zumindest einen Sensorelements 17 in der Messsonde 11 ist nur beispielhaft. Es können auch andere Ausführungsformen einer Messsonde 11 zur längsverschieblichen Lagerung des zumindest einen Sensorelements 17 im Gehäuse 14 vorgesehen sein.

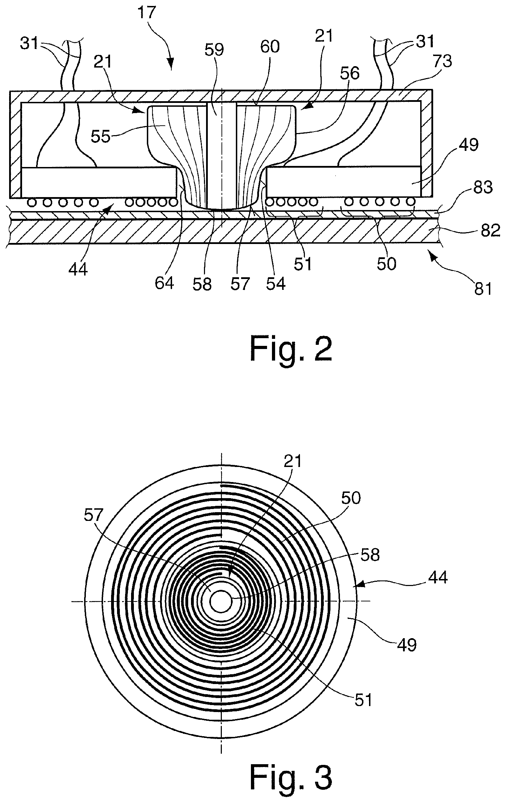

Eine erste Ausführungsform des zumindest einen Sensorelements 17 für eine Messsonde 11 ist in Figur 2 vergrößert dargestellt. Das Sensorelement 17 umfasst ein Gehäuse 73, welches eine erste Spulenvorrichtung 44 aufnimmt. Diese erste Spulenvorrichtung 44 umfasst einen scheibenförmigen Träger 49, auf welchem einlagig eine Spule 51 archimedisch vorgesehen ist. Die Spule 51 ist zur äußeren Stirnseite 53 des Gehäuses 14 weisend angeordnet. Die erste Spulenvorrichtung 44 weist eine zentrale Öffnung 54 auf, durch welche sich die Aufsetzkalotte 21 erstreckt.

Die Aufsetzkalotte 21 umfasst einen Grundkörper 55, der einen zylindrischen Kernabschnitt 56 aufweist, an dessen einen Ende eine verrundete Auflagefläche 57 vorgesehen ist. Diese verrundete Auflagefläche 57 weist eine Polkappe 58 auf. Diese Polkappe 58 erstreckt sich nur teilweise entlang der verrundeten Auflagefläche 57. Im Bereich der Polkappe 58 erfolgt das taktile Aufsetzen der Aufsetzkalotte 21 auf der Messober-fläche. Die Polkappe 58 ist beispielsweise durch einen Hartmetallkern 59 oder Hartmetallstift 59 ausgebildet. Dieser verrundeten Auflagefläche 57 gegenüber liegend ist eine plane Anlagefläche 60 vorgesehen.

Die Aufsetzkalotte 21 kann bei dieser Ausführungsform eine Polkappe 58 aufweisen, welche als Einsatz oder Stift ausgebildet ist. Dafür ist insbesondere ein Hartmetall vorgesehen, so dass die Polkappe 58 verschleißfester als das Material des Kernabschnitts 57 ist. Die Polkappe 58 kann auch nur als Beschichtung aus Hartmetall ausgebildet sein. Diese kann gegenüber der verrundeten Aufstandsfläche in einem kleineren Durchmesser ausgebildet sein oder die gesamte verrundete Auflagefläche überdecken.

Die Aufsetzkalotte 21 mit dem Grundkörper 55 besteht bevorzugt aus einem ferritischen Material, insbesondere Ferrit, und wird auch als Ferritpol bezeichnet. Dieses ferritische Material umfasst auch die Gruppe der oxidkeramischen Werkstoffe, die permanent magnetische Bipole enthalten. Die Polkappe 58, die zumindest teilweise über eine verrundete Auflagefläche 57 als Stirnseite der Aufsetzkalotte 21 erstreckt, besteht bspw. aus einer Hartmetallbeschichtung oder aus einem Hartmetalleinsatz, bspw. aus TiC, TiN oder Ti(c,n). Als Hartmetalleinsatz kann ein Hartmetallkern in Form eines Stiftes vorgesehen sein, der die Aufsetzkalotte 21 durchdringt. Alternativ kann auch eine Hartmetallvollkugel oder Hartmetallhalbkugel vorgesehen sein, die in der Aufsetzkalotte 21 eingesetzt ist und die Polkappe 58 bildet.

Bei der Aufsetzkalotte 21 weist der Kernabschnitt 56 einen verjüngten Halteabschnitt 64 auf, der im Durchmesser kleiner als der Kernabschnitt 56 ausgebildet ist. Dabei ist ein bevorzugt gerundeter Übergangsbereich vorgesehen, so dass sich die Magnetfeldlinien in dem Halteabschnitt 64 konzentrieren, das heißt, dass diese zur Messstelle hin konzentriert werden. Durch den verjüngten Halteabschnitt 64 wird des Weiteren der Vorteil erzielt, dass der Durchmesser der archimedischen Spule 51 weiter verkleinert beziehungsweise verringert werden kann, wodurch wiederum dünnere Schichten taktil gemessen werden können. Bei dieser Ausführungsform ist der Durchmesser der Polkappe 58 kleiner als die verrundete Auflagefläche 57 ausgebildet, welche an dem Halteabschnitt 64 vorgesehen ist, welcher wiederum im Durchmesser gegenüber dem Kernabschnitt 56 verringert ist.

Der Träger 49 kann eine an den Übergangsbereich zwischen dem Halteabschnitt 64 und dem Kernabschnitt 56 angepasste Kontur in der Öffnung 54 aufweisen, so dass eine passgenaue Anlage und Anordnung ermöglicht ist. Der Krümmungsradius im Übergangsbereich vom Halteabschnitt 64 zum Kernabschnitt 56 kann auch im Randbereich der Öffnung 54 des Trägers 49 vorgesehen sein.

Bei dem in Figur 2 dargestellten Sensorelement 17 ist beispielsweise eine Schaltung 76 vorgesehen, welche über Anschlussleitungen 31 die erste und zweite Spule 51, 50 der Spulenvorrichtung 44 kontaktiert. Alternativ kann die elektronische Schaltung in den Träger 49 implementiert oder auf der den Spulen 51, 50 gegenüberliegenden Seite des Trägers 49 aufgebracht oder aufgedruckt sein.

Bei der Spulenvorrichtung 44 gemäß Figur 2 ist eine innere Spule 50 und eine äußere Spule 51 vorgesehen, wobei die äußere Spule 51 die innere Spule umgibt und bevorzugt beide auf derselben Seite des Trägers 49 angeordnet sind.

Des Weiteren kann die Spule 50 alternativ auf der gegenüberliegenden Seite des Trägers 49 zur Spule 51 angeordnet und unmittelbar über dieser Spule 50 oder innerhalb der Spule 50 die Schaltung 76 vorgesehen sein. Dadurch kann wiederum ein kompaktes und flach bauendes Sensorelement 17 geschaffen werden. Alternativ kann die äußere Spule 50 der inneren Spule 51 gegenüberliegend am Träger 49 angeordnet sein und diesen mit Blickrichtung auf die Messoberfläche zumindest teilweise überdecken.

Das auf einer Messoberfläche 81 aufgesetzte Sensorelement 17 der Messsonde 11 zeigt, dass die Spulen 50, 51 der Spulenvorrichtung 44 sehr nahe an eine Messoberfläche des Messgegenstandes angenähert werden können, um eine Schichtdicke 83 auf einem Grundwerkstoff 82 beziehungsweise Werkstückträger zu ermitteln. Dabei sitzt die Aufsetzkalotte bevorzugt ausschließlich im Bereich der Polkappe 58 auf der Schicht 83 auf.

In Figur 3 ist eine Ansicht von unten auf das Sensorelement 17 gemäß Figur 2 dargestellt. Daraus sind die Größenverhältnisse von der Polkappe 58 zur verrundeten Auflagefläche 57 als auch die Durchmesser der Spulen 51, 50 ersichtlich.

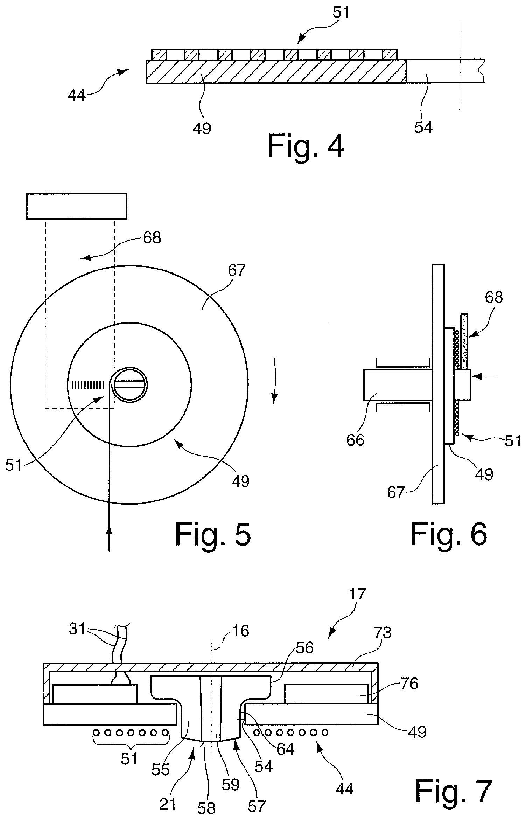

In Figur 4 ist schematisch vergrößert die erste Spulenvorrichtung 44 im Schnitt dargestellt. Gemäß einer ersten Ausführungsform besteht der Träger 49 aus Germanium oder insbesondere aus Silicium und weist beispielsweise eine Schichtdicke vom 100 µm auf. Auf diesem Träger 49 ist eine einlagige Spule als archimedische Spule 51 aufgebracht.

Gemäß Figur 4 wird zur Herstellung dieser archimedischen Spule 51 zunächst der Träger 49 mit einer metallisch leitenden Schicht, insbesondere einer Kupferschicht, versehen. Diese kann beispielsweise eine Dicke von weniger als 0,1 mm betragen. Insbesondere liegt die Dicke in einem Bereich von circa 0,01 mm. Im Anschluss daran wird mittels Laserabtrag die archimedische Spule 51 hergestellt, wobei bevorzugt eine Leitungsbreite von beispielsweise 0,019 mm bei einer Dicke von 0,01 mm verbleibt und zwischen den einzelnen Windungen ein Abstand in einem Bereich von 0,1 mm bis 0,05 mm, insbesondere von 0,01 mm, verbleibt. Auf diese Spule 51 kann eine nicht näher dargestellte Isolierschicht oder Schutzschicht aufgebracht werden, beispielsweise in Form eines Lackes oder dergleichen.

Bei dem beispielsweise aus Silizium ausgebildeten Träger 49 kann eine Scheibe mit einem Durchmesser von 3 mm und einer Dicke von 0,2 mm eine einlagige archimedische Spule 51 aufbringen. In ein konzentrisches Innenloch 54 des Trägers 49 wird bevorzugt eine Aufsetzkalotte 21 mit einem Kern 57 aus ferritischem Material eingesetzt. Im Zusammenspiel mit vorzugsweise einer einlagigen archimedischen Spule 51 auf dem Träger 49 mit hinreichenden Windungszahlen wird die Sonde 17 zur Wirbelstrommessung verwendet. Durch die Polkappe 58 konzentriert sich das Feld der einlagigen Spule 51 dergestalt, dass die räumliche Ausdehnung des Feldes äußerst gering ist. Es genügt im Moment, dass die Länge des ferritschen Pols 58 etwa dem mittleren Durchmesser einer einlagigen archimedischen Spule 51 entspricht. Verlängert man den zylindrischen ferritschen Pol 58 am Ende mit einem Mittelzapfen 42 oder einem Kern aus Weicheisen, wird die Permeabilität einer derartigen Anordnung nur unwesentlich verändert. Bei Einbringung einer zweiten Spulenanordnung 48, die bei Niederfrequenz betrieben wird, ist die Wirkungsweise der einlagigen archimedischen Spule 51 im Wirbelstrombetrieb nicht beeinflusst.

Als weitere Alternative zur Herstellung der Spule 51 auf dem Träger 49 wird ein Ätzverfahren eingesetzt, um die archimedische Spule 51 auszubilden. Des Weiteren kann alternativ ein Aufdampfverfahren von metallischen Schichten auf dem Träger 49 eingesetzt werden.

Eine weitere alternative Ausführungsform zur Herstellung der ersten Spulenvorrichtung 44 ist in den Figuren 5 und 6 dargestellt. Beispielsweise wird der Träger 49 auf einer Wickelachse 66 aufgebracht, welcher an einer Grundplatte 67 anliegt. Über ein Andruckelement 68, insbesondere eine Andruckfolie, wird eine Spaltbreite zum Träger 49 gebildet, wobei durch eine entsprechende Zuführung der Abstand zur benachbarten Windung eingestellt wird und über das Andruckelement 68 ein Verkleben der jeweils zugeführten Windung erfolgt. Eine solche Wickeltechnik ist selbst bei filigranen Strukturen wie der vorliegenden Erfindung möglich, bei welcher der Gesamtdurchmesser des Trägers 49 weniger als beispielsweise 3 mm beträgt.

Die Spulenvorrichtung 44 ist bevorzugt einlagig ausgebildet. Alternativ kann eine einlagige Anordnung gewählt werden, jedoch zwei oder mehrere Spulen 51, 50 vorgesehen sein, die jeweils ebenfalls eine archimedische Anordnung aufweisen und hintereinander beziehungsweise nebeneinander liegen. Des Weiteren können alternativ mehrere Lagen von Spulen 51 übereinander angeordnet sein, welche jedoch durch eine elektrische Isolierung oder eine Isolierschicht voneinander getrennt werden. Ebenso kann eine Kombination von übereinander und nebeneinander beziehungsweise hintereinander liegenden Spulen 51, 50 ermöglicht sein.

Beim Aufbau des Sensorelementes 17 kann der Träger 49 des Weiteren aus einer Siliciumscheibe bestehen und in dieses Material eine Schaltung der Spulenvorrichtung 44 mit einer ersten und/oder zweiten Spule 50, 51 integriert beziehungsweise implementiert werden. Alternativ kann der Träger 49 aus einem anderweitigen, nicht magnetisierbaren und nicht elektrisch leitenden Material bestehen und ergänzend eine Siliciumscheibe diesem Träger 49 zugeordnet werden, in dem die zumindest eine Schaltung enthalten ist. Bei dieser Ausgestaltung ist die Flexibilität zur Positionierung der Schaltung 76 im Sensorelement 17 erhöht. Bei der Integration der Schaltung 76 in dem Träger 49, der die zumindest eine archimedische Spule 51 aufnimmt, ist eine weitere Minimierung der Baugröße möglich. Je kleiner solche Sensorelemente 17 ausgebildet sind, desto unabhängiger ist die Messung der Dicke dünner Schichten von Störgrößen, insbesondere ein Krümmungsradius von zu prüfenden Oberflächen. Des Weiteren wird dadurch der Vorteil erzielt, dass kurze und einfache Leitungsanbindungen von der Schaltung 76 zur Spulenvorrichtung 44 gegeben sind und eine zentrale Leitung aus dem Gehäuse 73 herausgeführt werden kann.

Bei der Dimensionierung des Durchmessers eines Kernabschnittes 57 der aus Ferrit hergestellten Aufsetzkalotte 21 ist bevorzugt vorgesehen, dass diese dem halben Durchmesser des mittleren Durchmessers der Spule 51 der Spulenvorrichtung entspricht. Ebenso kann der Durchmesser des Kernabschnitts 57 der Aufsetzkalotte 21 größer ausgebildet sein.

In Figur 7 ist eine alternative Ausführungsform eines Sensorelementes 17 zu Figur 2 dargestellt. Bei diesem Ausführungsbeispiel ist wiederum eine Aufsetzkalotte 21 gemäß der Ausführungsform in Figur 2 vorgesehen. An dem Träger 49 ist die Spulenvorrichtung 44 mit nur einer Spule 51 und die Schaltung 76 positioniert. Über das Sensorgehäuse 73 ist das Sensorelement 17 geschlossen. Ein solches flach bauendes Sensorelement 17 ermöglicht eine Schichtdickenmessung nach dem Wirbelstromverfahren.

Eine alternative Ausführungsform der Aufsetzkalotte 21 sieht anstelle des Hartmetallkerns 59 eine Hartmetallbeschichtung zur Ausgestaltung der Polkappe 58 vor. Diese Hartmetallbeschichtung kann sich vollständig über die verrundete Auflagefläche 57 - aber auch nur im Bereich der beispielsweise in Figur 4 dargestellten Polkappe 58 - erstrecken. Dadurch kann wiederum der spröde Ferrit geschützt werden, so dass der Aufsetzkalotte 21 eine höhere mechanische Stabilität gegeben ist.

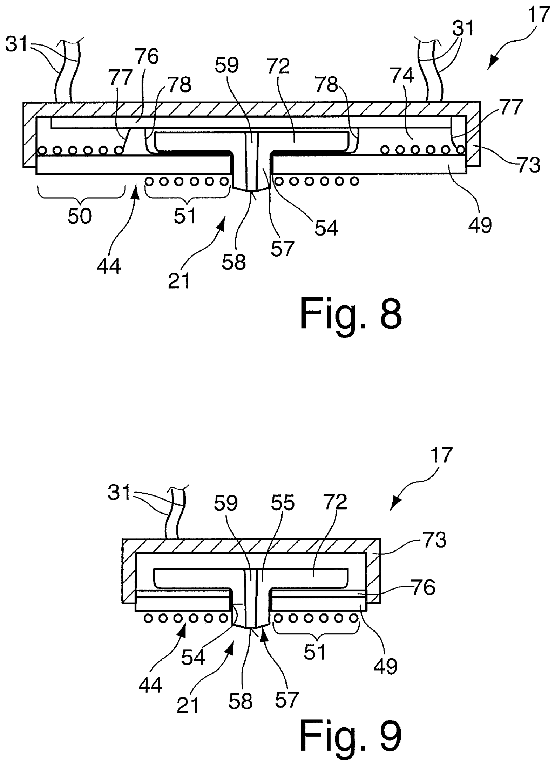

In Figur 8 ist eine alternative Ausführungsform eines Sensorelements 17 zu Figur 2 dargestellt. Bei diesem Sensorelement 17 sind sowohl die erste Spule 51 als auch die zweite Spule 50 als archimedische Spule ausgebildet. In einer Durchgangsöffnung 54 des Trägers 49 ist eine Aufsetzkalotte 21 hindurchgeführt, welche vorzugsweise aus einem ferritischen Material wie ein auf der Rückseite des Trägers 49 angeordneter erweiterter Kernabschnitt 72 ausgebildet ist. Dieser Kernabschnitt 72 erstreckt sich vorzugsweise der Spule 51 gegenüberliegend in einer radialen Erstreckungsrichtung, vorzugsweise entsprechend dem Durchmesser der Spule 51. Der Träger 49 wird von dem Sensorgehäuse 73 aufgenommen. Diese Anordnung und Fixierung des Trägers 49 zum Sensorgehäuse 73 kann in einer Klebe-, Rast- oder Steck- und/oder Clipsverbindung erfolgen. In einem zwischen dem Träger 49 und dem Sensorelement 73 gebildeten Freiraum 74 kann eine Gussmasse eingebracht werden. Alternativ kann dieser auch als Luftraum ausgebildet sein.

Bei dieser Ausführungsform gemäß Figur 8 ist vorgesehen, dass die zweite Spule 50 in Analogie zur ersten Spule 51 ausgebildet ist und diese umgibt sowie ebenfalls auf dem Träger 49 aufliegt. Gemäß einer ersten Ausführungsform ist die zweite Spule 50 der ersten Spule 51 gegenüberliegend angeordnet, wie dies in Figur 8 dargestellt ist. Alternativ können auch beide Spulen 51, 50 auf derselben Seite des Trägers 49 angeordnet sein. Bevorzugt sind beide Spulen 51, 50 einlagig als archimedische Spule ausgebildet. Dadurch werden diese Spulen 50, 51 während der Mess-ung quasi unmittelbar zur Messoberfläche positioniert, so dass die Mess-empfindlichkeit erhöht ist.

Dieses Sensorelement 17 kann des Weiteren eine Schaltung 76 umfassen, welche beispielsweise auf einer Innenseite eines Bodens des Sensorgehäuses 73 angeordnet ist. Dadurch kann eine einfache innenliegende Kontaktierung der Spulen 51, 50 mit den Anschlussleitungen 77, 78 erfolgen. Bevorzugt sind an dem Träger 49 Anschlussstellen oder Kontaktstellen vorgesehen, so dass eine einfache Anbindung der Anschlussleitungen 77, 78 ermöglicht ist. Alternativ kann die Schaltung 76 auch auf einer Außenseite des Sensorgehäuses 73 vorgesehen sein. Ebenso kann die Schaltung 76 in dem Träger 49 implementiert werden. Über Anschlussleitungen 31, die aus dem Sensorgehäuse 73 herausführen, werden die ermittelten Daten über die Verbindungsleitung 12 an die Datenverarbeitungseinrichtung weitergeleitet.

In Figur 9 ist eine weitere alternative Ausgestaltung eines Sensorelementes 17 dargestellt. Bei diesem Sensorelement 17 ist vorgesehen, dass dieses nur zur Messung nach dem Wirbelstromverfahren einsetzbar ist. Dieses Sensorelement 17 entspricht quasi der Ausführungsform gemäß Figur 8, wobei eine zweite Spule 50 nicht vorgesehen ist.

Dieses Sensorelement 17 umfasst eine Spulenvorrichtung 44 mit einer archimedischen Spule 51, welche auf dem Träger 49 bevorzugt einlagig aufgebracht ist. Der Träger 49 ist an dem Kernabschnitt 72 befestigt. Der Kernabschnitt 72 besteht bevorzugt aus ferritischem Material. Ebenso ist die Aufsetzkalotte 21 aus ferritischem Material ausgebildet und vorzugsweise einstückig mit dem Kernabschnitt 72 verbunden. Dieser Träger 49 mit dem daran angeordneten Kernabschnitt 72 und der Spulenvorrichtung 44 kann von einem Sensorgehäuse 73 aufgenommen werden, welches in ein Gehäuse 14 gemäß Figur 1 oder einem weiteren Gehäuse von Messsonden einsetzbar ist. Der Träger 49 gemäß den Figuren 8 und 9 kann entsprechend den vorbeschriebenen Alternativen ausgebildet sein. Gleiches gilt für die darauf angebrachte Spulenvorrichtung 44.

Durch die erfindungsgemäße Ausgestaltung und Anordnung des Sensorelementes 17 mit der ersten und zweiten Spule 50, 51 wird somit die Messempfindlichkeit für dünne Schichten erhöht, indem durch die Ausgestaltung des Ferritkerns zur zweiten Spule 50 eine höhere Feldkonzentration erzielt wird. Dadurch kann eine bessere Auflösung und Messgenauigkeit erzielt werden.

## Patentansprüche

1. Messsonde zur Messung der Dicke dünner Schichten mit einem Gehäuse (14), mit zumindest einem Sensorelement (17), welches entlang einer Längsachse (16) im Gehäuse (14) bewegbar aufgenommen ist und welches zumindest eine Spulenvorrichtung (44) umfasst, die der Längsachse (16) zugeordnet ist, mit einer zur äußeren Stirnseite (53) des Gehäuses (14) weisenden Aufsetzkalotte (21), die in der Längsachse (16) angeordnet ist, wobei die Aufsetzkalotte (21) einen Grundkörper (55) aufweist, der einen zylindrischen Kernabschnitt (56) und eine an einer Stirnseite des Kernabschnitts (56) angeordnete Polkappe (58) aufweist, **dadurch gekennzeichnet, dass** der Aufsetzkalotte (21) die Spulenvorrichtung (44) zugeordnet ist, welche aus einem scheiben- oder ringförmigen Träger (49) mit zumindest einer darauf angeordneten archimedischen Spule (51) ausgebildet ist und der Grundkörper (55) aus einem ferritischen Material und die Polkappe (58) aus Hartmetall besteht,

2. Messsonde nach Anspruch 1, **dadurch gekennzeichnet, dass** an dem Kernabschnitt (56) eine verrundete Auflagefläche (57) vorgesehen ist, in deren Längsachse (16) die Polkappe (58) angeordnet ist und vorzugsweise die Polkappe (58) sich über die verrundete Aufsetzfläche (57) erstreckt oder kleiner ausgebildet ist.

3. Messsonde nach Anspruch 1, **dadurch gekennzeichnet, dass** die Polkappe (58) durch eine Hartmetallbeschichtung, insbesondere aus einer TiC-Beschichtung, ausgebildet ist oder dass die Polkappe (58) durch einen Hartmetallkern (59) ausgebildet ist, der sich vorzugsweise vollständig durch den Grundkörper hindurch erstreckt.

4. Messsonde nach Anspruch 2, **dadurch gekennzeichnet, dass** die verrundete Aufsetzfläche (57) im Durchmesser kleiner als der Kernabschnitt (56) ausgebildet ist und die verrundete Aufsetzfläche (57) an einem gegenüber dem Kernabschnitt (56) verjüngten Halteabschnitt (64) vorgesehen ist, der einen gerundeten oder gestuften Übergang zum Kernabschnitt (56) aufweist und insbesondere an dem Halteabschnitt (64) des Grundkörpers (55) der Träger (49) angeordnet ist und vorzugsweise die Höhe des Halteabschnitts (64) vom Grundkörper (55) zumindest der Dicke des ring- oder scheibenförmigen Trägers (49) entspricht.

5. Messsonde nach Anspruch 1, **dadurch gekennzeichnet, dass** die Aufsetzkalotte (21) aus Eisenoxid oder aus einem Kunststoffmaterial mit Eisenpartikeln besteht.

6. Messsonde nach Anspruch 1, **dadurch gekennzeichnet, dass** die Spulenvorrichtung (44) eine einlagige archimedische Spule (51) auf dem Träger (49) umfasst.

7. Messsonde nach Anspruch 1, **dadurch gekennzeichnet, dass** die archimedische Spule (51) der Spulenvorrichtung (44) zur Stirnseite (53) des Gehäuses (14) nach außen weisend positioniert ist.

8. Messsonde nach Anspruch 1, **dadurch gekennzeichnet, dass** auf dem Träger (49) zumindest eine zweite Spule (50) vorgesehen ist, welche als zumindest eine weitere archimedische Spule ausgebildet ist und auf derselben oder einer gegenüberliegenden Seite des Trägers (49) angeordnet ist.

9. Messsonde nach Anspruch 1, **dadurch gekennzeichnet, dass** die erste und zweite Spule (50, 51) der Spulenvorrichtung (44) einander gegenüber liegend auf dem Träger (49) angeordnet sind und die Spule (50), welche eine höhere Anzahl Windungen als die Spule (51) umfasst, diese zumindest teilweise überdeckt.

10. Messsonde nach Anspruch 1, **dadurch gekennzeichnet, dass** die Spulenvorrichtung (44) eine erste und eine zweite Spule (51, 50) aufweist, wobei die erste Spule (50) weniger Windungen als die zweite Spule (51) aufweist und die erste Spule (51) zur Messung der Schichtdicke und die zweite Spule (50) zur Ermittlung einer Abweichung der Messoberfläche aus einer Ebene vorgesehen ist, wobei die Spulen (50, 51) mit einer Frequenz von mehr als 1 MHz betrieben werden.

11. Messsonde nach Anspruch 1, **dadurch gekennzeichnet, dass** auf die zumindest eine archimedische Spule (51, 50) der Spulenvorrichtung (44) eine Isolierschicht aufgebracht ist.

12. Messsonde nach Anspruch 1, **dadurch gekennzeichnet, dass** der Träger (49) der Spulenvorrichtung (44) am stirnseitigen Abschnitt der Aufsetzkalotte (21) benachbart zur Polkappe (58) oder an diese angrenzend durch eine Klebe-, Rast- oder Steckverbindung befestigt ist.

13. Messsonde nach Anspruch 1, **dadurch gekennzeichnet, dass** der Träger (49) aus einem elektrisch nicht leitenden und nicht magnetisierbaren Material besteht, welches vorzugsweise flach scheiben- oder ringförmig ausgebildet ist und vorzugsweise aus einem Halbleitermaterial, insbesondere aus Germanium oder Silicium, ausgebildet ist, welcher vorzugsweise eine Dicke von weniger als 300 µm oder insbesondere weniger als 150 µm aufweist.

14. Messsonde nach Anspruch 1, **dadurch gekennzeichnet, dass** dem Träger (49) ein erweiterter ferritischer Kernabschnitt (72) mit einer Aufsetzkalotte (21) zugeordnet ist, der am Träger (49) der ersten Spule (51) gegenüberliegend angeordnet ist und in radialer Erstreckungsrichtung die erste Spule (51) überdeckt.

15. Messsonde nach Anspruch 1, **dadurch gekennzeichnet, dass** der Träger (49) aus einem Halbleitermaterial eine implementierte oder aufgedruckte Schaltung zumindest für die Spulenvorrichtung (44) umfasst und vorzugsweise der Träger (49) mit einer darin implementierten oder einer aufgedruckten Schaltung (76) an einer Innenseite des Sensorgehäuses (73) oder an einer zur Außenseite des Gehäuses (14) weisenden Stirnseite des Sensorgehäuses (73) angeordnet ist oder der Träger (49) mit der implementierten Schaltung zwischen der ersten und der zweiten Spule (50,51) der Spulenvorrichtung (44) angeordnet ist.

16. Verfahren zur Herstellung von zumindest einem Sensorelement (17) mit zumindest einer Spulenvorrichtung (44) für eine Messsonde (11) nach einem der Ansprüche 1 bis 15, **dadurch gekennzeichnet,**
- **dass** auf einen ring- oder scheibenförmigen Träger (49) zumindest eine archimedische Spule (51) mit Anschlusskontakten zum Träger (49) aufgebracht wird, wobei
- auf den Träger durch einen Wickelprozess zumindest eine archimedische Spule (51) aufgebracht wird oder
- ein Wickeldraht auf den Träger (49) aufgeklebt und mit einem Andruckelement (68) auf dem Träger (49) während oder nach dem Wickelprozess befestigt wird.

## Claims

1. Measuring probe for measuring the thickness of thin layers with a housing (14), having at least one sensor element (17), which is received in the housing (14) at least slightly moveably along a longitudinal axis (16) and which comprises at least one winding device (44), which is allocated to the longitudinal axis (16), having a spherical positioning cap (21) facing the outer front face (53) of the housing (14), said cap being arranged in the longitudinal axis (16), wherein the spherical positioning cap (21) has a basic body (55) that has a cylindrical core section (56) and a pol cap (58) arranged on a front face of the core section (56), **characterised in that** the winding device (44) is allocated to the spherical positioning cap (21), said winding device being formed from a discoidal or annular carrier (49) with at least one Archimedean coil (51) arranged thereon and with the basic body (55) consisting of a ferritic material and the pol cap (58) consisting of a hard metal.

2. Measuring probe according to claim 1, **characterised in that** a rounded bearing surface (57) is provided on the core section (56), in the longitudinal axis (16) of which bearing surface the pol cap (58) is arranged and the pol cap (58) preferably extends over the rounded bearing surface (57) or is designed to be smaller than it.

3. Measuring probe according to claim 1, **characterised in that** the pol cap (58) is formed by a hard metal coating, in particular a TiC coating, or that the pol cap (58) is formed by a hard metal core (59), which preferably extends completely through the basic body.

4. Measuring probe according to claim 2, **characterised in that** the rounded bearing surface (57) is formed with a diameter that is smaller than the core section (56) and the rounded bearing surface (57) is provided on a tapered holding section (64) opposite the core section (56), which holding section has a rounded or tiered transition to the core section (56) and, in particular, the carrier (49) is arranged on the holding section (64) of the basic body (55) and preferably the height of the holding section (64) from the basic body (55) corresponds at least to the thickness of the annular or discoidal carrier (49).

5. Measuring probe according to claim 1, **characterised in that** the spherical positioning cap (21) consists of iron oxide or a plastic material with iron particles.

6. Measuring probe according to claim 1, **characterised in that** the winding device (44) comprises a single-layer Archimedean coil (51) on the carrier (49).

7. Measuring probe according to claim 1, **characterised in that** the Archimedean coil (51) of the winding device (44) is positioned pointing outwards towards the front face (53) of the housing (14).

8. Measuring probe according to claim 1, **characterised in that** at least one second coil (50) is provided on the carrier (49), which is formed as at least one further Archimedean coil and is arranged on the same or an opposite side of the carrier (49).

9. Measuring probe according to claim 1, **characterised in that** the first and second coil (50, 51) of the winding device (44) are arranged opposite each other on the carrier (49) and the coil (50), which comprises a larger number of windings than the coil (51), at least partially covers this second coil.

10. Measuring probe according to claim 1,
**characterised in that** the winding device (44) has a first and a second coil (51, 50), wherein the first coil (50) has fewer windings than the second coil (51) and the first coil (51) is provided for measuring the layer thickness and the second coil (50) is provided to determine a deviation of the measuring surface from a plane, wherein the coils (50, 51) are operated with a frequency of greater than 1MHz.

11. Measuring probe according to claim 1,
**characterised in that** an insulating layer is applied to the at least one Archimedean coil (51, 50) of the winding device (44).

12. Measuring probe according to claim 1,
**characterised in that** the carrier (49) of the winding device (44) is fastened to the front section of the spherical positioning cap (21) adjacent to the pol cap (58), or bordering this, by an adhesive, latching or plug connection.

13. Measuring probe according to claim 1,
**characterised in that** the carrier (49) consists of an electrically non-conductive and non-magnetic material, which is preferably designed to be flatly discoidal or annular, and preferably is formed from a semi-conductive material, in particular germanium or silicon, which preferably has a thickness of less than 300µm or in particular less than 150µm.

14. Measuring probe according to claim 1,
**characterised in that** an expanded, ferritic core section (72) having a spherical positioning cap (21) is allocated to the carrier (49), which core section is arranged on the carrier (49) opposite the first coil (51) and covers the first coil (51) in the radial extension direction.

15. Measuring probe according to claim 1,
**characterised in that** the carrier (49) made from a semi-conductive material comprises an implemented or inscribed circuit, at least for the winding device (44) and preferably the carrier (49) having a circuit (76) implemented thereon or inscribed thereon is arranged on an inner side of the sensor housing (73) or on a front face of the sensor housing (73) pointing towards the outer side of the housing (14), or the carrier (49) having the implemented circuit is arranged between the first and the second coil (50, 51) of the winding device (44) .

16. Method for the production of at least one sensor element (17), having at least one winding device (44) for a measuring probe (11) according to one of claims 1 to 15, **characterised in**
- **that** at least one Archimedean coil (51) with connecting contacts to the carrier (49) is applied to an annular or discoidal carrier (49), wherein
- at least one Archimedean coil (51) is applied to the carrier by a winding process, or
- a winding wire is adhered to the carrier (49) and is fastened to the carrier (49) using a press-on element (68) during or after the winding process.

## Revendications

1. Sonde de mesure destinée à mesurer l'épaisseur de couches minces, pourvue d'un boîtier (14), d'au moins un élément capteur (17) qui est logé dans le boîtier (14) de manière à se déplacer le long d'un axe longitudinal (16) et qui comprend au moins un dispositif de bobines (44) qui est affecté à l'axe longitudinal (16), d'une calotte de positionnement (21) dirigée vers la face frontale extérieure (53) du boîtier (14) et disposée dans l'axe longitudinal (16), la calotte de positionnement (21) présentant un corps de base (55) qui présente une partie de noyau (56) cylindrique et un couvre-pôle (58) disposé sur une face frontale de la partie de noyau (56), **caractérisée en ce que** le dispositif de bobines (44) est affecté à la calotte de positionnement (21) et est réalisé en tant que support (49) en forme de disque ou d'anneau sur lequel est disposée au moins une spirale d'Archimède (51) et **en ce que** le corps de base (55) est constitué en un matériau ferritique et que le couvre-pôle (58) est en métal dur.

2. Sonde de mesure selon la revendication 1, **caractérisée en ce que** sur la partie de noyau (56) est prévue une surface d'appui arrondie (57) dans l'axe longitudinal (16) de laquelle est disposé le couvre-pôle (58) et **en ce que** le couvre-pôle (58) s'étend de préférence par-dessus la surface de positionnement arrondie (57) ou est plus petit que celle-ci.

3. Sonde de mesure selon la revendication 1, **caractérisée en ce que** le couvre-pôle (58) est formé par un revêtement en métal dur, en particulier un revêtement TiC, ou **en ce que** le couvre-pôle (58) est formé par un noyau en métal dur (59) qui s'étend de préférence entièrement à travers le corps de base.

4. Sonde de mesure selon la revendication 2, **caractérisée en ce que** la surface de positionnement arrondie (57) possède un diamètre inférieur à celui de la partie de noyau (56) et que la surface de positionnement arrondie (57) est prévue sur une partie de retenue (64) qui est rétrécie par rapport à la partie de noyau (56) et qui présente une transition ronde ou étagée par rapport à ladite partie de noyau (56), et **en ce que** le support (49) est disposé en particulier sur la partie de retenue (64) du corps de base (55) et que de préférence la hauteur de la partie de retenue (64) du corps de base (55) correspond au moins à l'épaisseur du support (49) en forme d'anneau ou de disque.

5. Sonde de mesure selon la revendication 1, **caractérisée en ce que** la calotte de positionnement (21) est constituée en oxyde de fer ou en une matière plastique contenant des particules de fer.

6. Sonde de mesure selon la revendication 1, **caractérisée en ce que** le dispositif de bobines (44) comprend une bobine d'Archimède (51) à une seule couche disposée sur le support (49).

7. Sonde de mesure selon la revendication 1, **caractérisée en ce que** la bobine d'Archimède (51) du dispositif de bobines (44) est positionnée de manière à être orientée vers l'extérieur, du côté de la face frontale (53) du boîtier (14).

8. Sonde de mesure selon la revendication 1, **caractérisée en ce que** sur le support (49) est prévue au moins une deuxième bobine (50) formée en tant qu'au moins une autre bobine d'Archimède et disposée sur le même côté du support (49) ou sur un côté opposé de celui-ci.

9. Sonde de mesure selon la revendication 1, **caractérisée en ce que** la première et la deuxième bobine (50, 51) du dispositif de bobines (44) sont disposées en regard l'une de l'autre sur le support (49) et que la bobine (50) qui comprend un nombre d'enroulements plus élevé que la bobine (51) recouvre au moins en partie cette dernière.

10. Sonde de mesure selon la revendication 1, **caractérisée en ce que** le dispositif de bobines (44) présente une première et une deuxième bobine (51, 50), la première bobine (50) présentant moins d'enroulements que la deuxième bobine (51), et la première bobine (51) étant prévue pour mesurer l'épaisseur de couche et la deuxième bobine (50) étant prévue pour déterminer un écart de la surface de mesure par rapport à un plan donné, les bobines (50, 51) fonctionnant avec une fréquence de plus de 1 MHz.

11. Sonde de mesure selon la revendication 1, **caractérisée en ce qu'**une couche isolante est appliquée sur ladite au moins une bobine d'Archimède (51, 50) du dispositif de bobines (44).

12. Sonde de mesure selon la revendication 1, **caractérisée en ce que** le support (49) du dispositif de bobines (44) est fixé sur la partie frontale de la calotte de positionnement (21) de manière contiguë au couvre-pôle (58) ou de manière adjacente à celui-ci grâce à un assemblage collé, un assemblage à enclenchement ou un assemblage à emboîtement.

13. Sonde de mesure selon la revendication 1, **caractérisée en ce que** le support (49) est constitué en un matériau non-électrocondcuteur et non-aimantable lequel est de préférence de forme plate, en forme de disque ou en forme d'anneau, et qui est réalisé de préférence en un matériau semi-conducteur, en particulier en germanium ou en silicium, lequel présente de préférence une épaisseur de moins de 300 µm ou en particulier de moins de 150 µm.

14. Sonde de mesure selon la revendication 1, **caractérisée en ce qu'**au support (49) est affectée une partie de noyau élargie (72) en ferrite pourvue d'une calotte de positionnement (21), laquelle partie est disposée sur le support (49) du côté opposé à la première bobine (51) et recouvre ladite première bobine (51) dans la direction d'extension radiale.

15. Sonde de mesure selon la revendication 1, **caractérisée en ce que** le support (49) réalisé en un matériau semi-conducteur comprend un circuit implémenté ou imprimé au moins pour le dispositif de bobines (44) et **en ce que** le support (49) pourvu d'un circuit (76) implémenté ou imprimé est disposé de préférence sur une face intérieure du boîtier de capteur (73) ou sur une face frontale du boîtier de capteur (73) tournée vers la face extérieure du boîtier (14), ou **en ce que** le support (49) pourvu du circuit implémenté est disposé entre la première et la deuxième bobine (50, 51) du dispositif de bobines (44).

16. Procédé destiné à fabriquer au moins un élément capteur (17) pourvu d'au moins un dispositif de bobines (44) pour une sonde de mesure (11) selon l'une quelconque des revendications 1 à 15, **caractérisé en ce que**
- sur un support (49) en forme d'anneau ou de disque est appliquée au moins une bobine d'Archimède (51) pourvue de contacts de connexion vers ledit support (49),
- au moins une bobine d'Archimède (51) étant appliquée sur le support grâce à un processus de bobinage ou
- un fil de bobinage étant appliqué par collage sur le support (49) et étant fixé sur ledit support (49), pendant ou après le processus de bobinage, grâce à un élément presseur (68).
